(19) **Europäisches Patentamt / European Patent Office / Office européen des brevets**

(11) **EP 1 383 395 B1**

(12) **EUROPEAN PATENT SPECIFICATION**

(45) Date of publication and mention
of the grant of the patent:
**05.10.2011 Bulletin 2011/40**

(21) Application number: **02713984.9**

(22) Date of filing: **23.04.2002**

(51) Int Cl.:
*A23K 1/00* (2006.01)    *A23K 1/16* (2006.01)
*A23K 1/18* (2006.01)

(86) International application number:
**PCT/CA2002/000545**

(87) International publication number:
**WO 2002/085132 (31.10.2002 Gazette 2002/44)**

(54) **IMPROVED ADDITIVE FOR LIVESTOCK FEEDS**

VERBESSERTER ZUSATZSTOFF FÜR TIERFÜTTER

ADDITIF PERFECTIONNE DESTINE A DES PRODUITS ALIMENTAIRES POUR LE BETAIL

(84) Designated Contracting States:
**AT BE CH CY DE DK ES FI FR GB GR IE IT LI LU MC NL PT SE TR**

(30) Priority: **24.04.2001 US 286276 P**

(43) Date of publication of application:
**28.01.2004 Bulletin 2004/05**

(60) Divisional application:
**10183091.7 / 2 283 733**

(73) Proprietor: **THE UNIVERSITY OF BRITISH COLUMBIA**
**Vancouver,**
**British Columbia V6T 1Z3 (CA)**

(72) Inventors:
• **CHENG, Kuo-Joan**
**Richmond, British Columbia V6Y 3W8 (CA)**
• **SOLA, José**
**c/o Anselmo Clavé**
**E-08100 Barcelona (ES)**

(74) Representative: **Chapman, Paul William et al**
**Kilburn & Strode LLP**
**20 Red Lion Street**
**London**
**WC1R 4PJ (GB)**

(56) References cited:
**EP-A- 0 154 959     EP-A- 1 044 687**
**EP-A- 1 066 761     AU-B- 665 091**
**DE-A- 3 220 103     FR-A- 2 700 668**
**GB-A- 1 078 285     US-A- 4 661 358**
**US-A- 5 230 836     US-A- 5 244 681**
**US-A- 5 314 852     US-A- 5 895 659**
**US-A- 5 968 251     US-A- 6 013 255**
**US-B1- 6 221 381**

• **DATABASE WPI Section Ch, Week 199511 Derwent Publications Ltd., London, GB; Class B05, AN 1995-081956 XP002210222 -& WO 95 03712 A (GOLDENBERG V I), 9 February 1995 (1995-02-09)**
• **DATABASE WPI Section Ch, Week 199414 Derwent Publications Ltd., London, GB; Class B05, AN 1994-114184 XP002210223 -& JP 06 062761 A (NISSHIN BADISHE KK), 8 March 1994 (1994-03-08)**
• **DATABASE WPI Section Ch, Week 199310 Derwent Publications Ltd., London, GB; Class B05, AN 1993-080319 XP002210224 -& JP 05 025042 A (TAKEDA CHEM IND LTD), 2 February 1993 (1993-02-02)**
• **DATABASE WPI Section Ch, Week 199224 Derwent Publications Ltd., London, GB; Class A97, AN 1992-198083 XP002210225 -& SU 1 676 572 A (KIEV DARNINA CHEM PHARM PRODN ASSOC), 15 September 1991 (1991-09-15)**

**Description**

Field of the Invention

The present invention relates generally to ruminant feed compositions containing nonionic surfactants, either alone or in combination with digestion enhancing agents, and to methods for enhancing feedstock utilization efficiency in ruminant livestock. More particularly, this invention relates to the stabilization of nonionic surfactants in particulate or liquid ruminant feed additives.

Background of the Invention

Anaerobic fermentation occurs during ruminant digestion, during which proteins and carbohydrates are degraded. It is desirable in ruminant digestion to be able to control protease and carbohydrase activity to optimize the digestive process.

Since feed is a major cost in ruminant production, enhancing digestive efficiency remains a driving objective in the industry. Although forages remain the major feed source, it is widely believed that the efficiency of feed utilization by ruminants has remained relatively unchanged during the last two decades. New innovations that enhance the digestive efficiency provide a compromise to emerging environmental concerns regarding ground water pollution in most dairying areas. Nevertheless, an in depth understanding of the roles of feed processing and bacterial digestion are required to fully manipulate the digestive processes of the rumen. Cheng et al. ("Microbial ecology and physiology of feed degradation within the rumen," in Physiological aspects of digestion and metabolism in ruminants: Proceedings of the seventh international symposium on ruminant physiology, Tsuda, Ed., 1991) has identified the following three general factors as influencing microbial digestion of feeds: (a) plant structures that regulate bacterial access to nutrients; (b) microbial factors that control adhesion and the development of digestive microbial consortia; and (c) complexes of oriented hydrolytic enzymes of the adherent microorganisms. Feed processing practices, e.g., grinding, normally attempt to increase enzyme-substrate interaction by the exposition of susceptible substrate binding sites.

The manipulation of digestion within the rumen in order to increase the efficiency of feed utilization has been achieved through the use of exogenous enzymes (Feng et al., "Effect of enzyme additives on in situ and in vitro degradation of mature cool-season grass forage," J. Anim. Sci. 70 (Suppl. 1):309 (1996)), and such compounds as ionophore antibiotics, methane production inhibitors, inhibitors of proteolysis or deamination, and buffers (Jouany, "Methods of manipulating the microbial metabolism in the rumen," Ann. Zootech. 43:49-62 (1994)). The increased digestive efficiency realized through the use of these compounds is the result of major shifts in microbial fermentation pathways. For example, the selective use of antibiotics can alter the rumen microbial population and ultimately influence the end products of digestion. Antibiotics are, however, used only in meat producing animals because of the risk of antibiotic transfer to milk. Production responses of animals fed exogenous enzymes have been inconsistent. Exogenous enzymes have been shown to increase (Beauchemin et al., "Fibrolytic enzymes increase fiber digestibility and growth rate of steers fed dry forages," Can. J. Anim. Sci. 75:641-644 (1995)), to not affect (Perry et al., "Effects of supplemental enzymes on nitrogen balance, digestibility of energy and nutrients and on growth and feed efficiency of cattle," J. Anim. Sci. 25:760-764 (1966)), and even to decrease (Svozil et al., "Application of a cellulolytic preparation in nutrition of lambs" Sbor., Ved. Praci. VUVZ Prhrelice 22:69-78 (1989)) the growth performance of ruminants fed forage or concentrate-based diets. The inconsistency is partly due to the numerous enzyme preparations available, application methods, and their interaction with different types of diets.

Long-chain fatty acids and the halogen homologues of methane have been found to reduce methane production in the rumen (Van Nevel et al., "Manipulation of rumen fermentation," In: The Rumen Microbial Ecosystem., Ed. P.N.Hobson. Elsevier Applied Science, London, pp. 387 et seq. (1988)). The reduction in methane production is usually associated with a decrease in deamination of amino acids, particularly, branched-chain amino acids and an increase in propionic acid production. The main limitation with the use of these additives is that rumen microbes are able to adapt and degrade them after about one month of treatment. Another disadvantage is that the beneficial effect appears to be consistent only in forage-based diets that favor methane production.

Buffers are mainly used under conditions where the feeding of high levels of grains can induce an active fermentation and cause excess production of acids within the rumen. They act by regulating and maintaining the pH at levels at which the cellulolytic microorganisms can be of maximum effectiveness (pH = 6-7). The digestion of starch and proteins is generally decreased when buffers are fed, however, the effect on the digestion of cell wall carbohydrates is inconsistent (Jouany, "Methods of manipulating the microbial metabolism in the rumen," Ann. Zootech. 43:49-62 (1994)).

Surfactants have been used in the food processing industry as emulsifiers and extenders (Griffin et al., "Surface Active Agents," in Handbook of Food Additives. 2nd Ed., T.E. Furia, Ed., CRC Press, New York, New York, p 397 et seq. (1972)) and also as cleaning agents. The most well known physicochemical property of surfactants is their interfacial activity when placed in solution. Their ability to align at the interfaces is a reflection of their tendency to assume the most energetically stable orientation. One type of nonionic surfactant, the polyoxyethylene sorbitan esters, is synthesized by the addition, via polymerization, of ethylene oxide to sorbitan fatty acid esters. These nonionic hydrophilic emulsifiers are very effective antistaling agents and are therefore used in a variety of bakery products. They are widely known as polysorbates. The effects of the polysorbate Tween 80 on the hydrolysis of newspaper was investigated by Castanon et al., "Effects of the surfactant Tween 80 on enzymatic hydrolysis of newspaper," Biotechnol. & Bioeng. 23:1365 (1981).

US 5 314 852 A discloses a chemically impregnated zeolite composition, comprising nutrients, which can be used for ruminant feed applications. Cetyl trimethylammonium chloride can be used as coating to control release.

More recently, Shelford et al. U.S. Patent No. 6,221,381 issued April 24, 2001 discloses that when nonionic surfactants are admixed in ruminant feedstuffs at a concentration of from about 0.01 to 1% (w/w) and the feedstuffs are fed to ruminants, significantly higher productivity can be expected from these animals. Higher productivity may be characterized by higher milk yield, increased rate of weight gain, higher efficiency in converting feed into body tissues or milk, and/or a reduction in manure production. This patent further discloses that when nonionic surfactants at a concentration of from about 0.01 to 1% (w/w) are combined with digestive enzymes, such as glycanases, and admixed with ruminant feeds, ruminant animals consuming said feed have higher feed conversion efficiencies and productivity.

In one embodiment of U.S. Patent No. 6,221,381, the nonionic surfactant is coated on a carrier such as celite, diatomaceous earth, or silica and admixed with the feed before feeding the feed to the animal. The surfactant coats the surface of the carrier to enhance attachment of enzymes and or bacteria once the animal consumes the feed material.

Although the methods and compositions of U.S. Patent No. 6,221,381 have been found to result in substantial enhancements in milk production in dairy herds and substantial enhancements in weight gain in feedlot cattle, it has now been discovered that liquid nonionic surfactant materials containing unsaturated fatty acid chains, when coated onto a particulate carrier, are subject to rapid surfactant degradation and rancidity development. The present invention provides improved compositions and methods that utilize stabilized nonionic surfactants to substantially extend the shelf life of surfactant-containing liquid feed additives and surfactant coated, particulate feed enhancing compositions. The compositions and methods described in this invention optimize the digestive process in ruminant animals, enhance productivity of ruminant animals, reduce waste production and ultimately improve profitability.

## Summary of the Invention

The present invention provides new and surprising methods and compositions for enhancing feed utilization efficiency in ruminant animals, such as cattle, sheep, goats, deer, bison, water buffalo and camels. In particular, it has now been discovered that when antioxidant materials are added to the nonionic surfactants of liquid or particulate feed additives of the type disclosed in U.S. Patent No. 6,221,381 an improved feed additive product results that exhibits a substantially extended shelf life. The improved liquid or particulate feed additive product may then be admixed in ruminant feedstuffs in amounts ranging from about 20 to about 60 g/cow/day for liquid feed additives of the invention and in amounts ranging from about 40 to about 120 g/cow/day for particulate feed additives, resulting in significantly higher productivity from these animals. Higher productivity may be characterized by higher milk yield, increased rate of weight gain, higher efficiency in converting feed into body tissues or milk, and/or a reduction in manure production. It has also been discovered that when the stabilized nonionic surfactants at a concentration of from about 0.01 to 1 % (w/w) based on the ratio of the weight of the surfactant in the feed additive to the weight of the feedstuffs fed to ruminants are combined with digestive enzymes, such as glycanases, and admixed with ruminant feeds, ruminant animals consuming said feed have higher feed conversion efficiencies and productivity.

In other aspects, the present invention provides compositions and methods that modify fermentation within the rumen towards more propionic acid production at the expense of acetic acid. Less heat is produced during the metabolism of propionic acid in the animal compared to that produced during the metabolism of acetic acid. Therefore the methods and compositions of the invention may be used to mitigate the effect of heat stress in ruminant animals.

In one preferred embodiment of the present invention, a nonionic surfactant is mixed with a suitable antioxidant agent and then coated onto a particulate carrier such as celite, diatomaceous earth, or silica to form a particulate feed additive material. The feed additive may then be admixed with animal feed before feeding the feed to an animal. Mixing of the coated particles with the feed ensures even distribution of the surfactant in the entire feed material, to enhance attachment of enzymes and or bacteria once the animal consumes the feed material, while inclusion of an antioxidant in the coating substantially enhances the shelf life of the particulate feed additive product.

## Detailed Description of the Preferred Embodiment

According to one aspect of the present invention, methods and compositions are provided for enhancing feed utilization efficiency in ruminant animals, comprising adding to the feed of the animals a sufficient amount of a nonionic surfactant coated particulate feed additive to enhance the utilization of the feed by the animal. In this aspect of the invention, the particulate feed additive coating comprises, in addition to the surfactant, a sufficient amount of an antioxidant material to substantially increase the shelf life of the particulate feed additive.

The term "feed efficiency" or "feed utilization" or "feed conversion" as used herein means the amount of feed needed to obtain a given amount of weight gain or milk production. In particular, feed efficiency or utilization expresses the efficiency by which an animal converts feed into weight gain or milk production. Feed efficiency is expressed as the ratio of weight of feed to weight gain (or milk production).

Although the terms "feed efficiency" and "weight gain" are often used together, there is a significant difference between the two as can be seen by the above definitions. Specifically, the determination of feed efficiency depends upon a given weight gain or milk production whereas the determination of weight gain or absolute milk production does not depend upon a given feed efficiency. The differences are especially significant to an animal producer or dairy farmer. In particular, weight gain or milk production can be achieved with little, no or even negative change in feed efficiency. Thus, for the animal producer, merely obtaining increases in weight gain or milk production may not necessarily be a more cost effective method for growth of the animal. While a producer looks at numerous factors in determining the cost of production, feed utilization efficiency is probably the most important and has the most impact on cost per pound of meat produced.

Thus, in one aspect of the invention, new particulate feed additives and methods are provided for enhancing weight gain in a ruminant animal for a given amount of animal feed, comprising adding to the feed a sufficient amount of a particulate feed additive to enhance the weight gain by the animal, wherein the particulate feed additive comprises a particulate substrate coated with a nonionic surfactant and an antioxidant agent. In yet other aspects of the invention, methods and compositions are provided for enhancing milk production by a ruminant animal, comprising adding to the feed of the animal a sufficient amount of a particulate feed additive to enhance milk production by the animal, wherein the particulate feed additive comprises a particulate substrate coated with a nonionic surfactant and an antioxidant agent. In still other aspects of the invention, methods and compositions are provided for reducing the adverse effects of heat stress in a ruminant animal, comprising adding to the feed of the animal a sufficient amount of a nonionic surfactant coated on a particulate carrier to enhance feed utilization efficiency, enhance weight gain and/or enhance milk production by the animal.

In another aspect of the invention, new liquid feed additives and methods are provided for enhancing weight gain in a ruminant animal for a given amount of animal feed, comprising adding to the feed a sufficient amount of a liquid feed additive to enhance the weight gain by the animal, wherein the feed additive comprises a nonionic surfactant and an antioxidant agent. In yet other aspects of the invention, methods and compositions are provided for enhancing milk production by a ruminant animal, comprising adding to the feed of the animal a sufficient amount of a liquid feed additive to enhance milk production by the animal, wherein the feed additive comprises a nonionic surfactant and an antioxidant agent. In still other aspects of the invention, methods and compositions are provided for reducing the adverse effects of heat stress in a ruminant animal, comprising adding to the feed of the animal a sufficient amount of a nonionic surfactant to enhance feed utilization efficiency, enhance weight gain and/or enhance milk production by the animal.

As used herein, the term "ruminant" means an even-toed hoofed animal which has a complex 3- or 4-chambered stomach, and which is characterized by chewing again what it has already swallowed. Some examples of ruminants include cattle, sheep, goats, deer, bison, water buffalo and camels.

As used herein, "surfactant(s)" include surface active agents that are organic or organic-metal molecules that exhibit polar and solubility behavior that result in the phenomenon known as surface activity. The most commonly recognized phenomenon in this respect is the reduction of the boundary between two immiscible fluids. Surfactants include surface active agents, which act as emulsifiers, wetting agents, solubilizers, detergents, suspending agents, crystallization modifiers (both aqueous and non aqueous), complexing agents and in other ways. The surfactants most useful in the practice of the present invention are the nonionic surfactants, including, without limitation, polyoxyethylenesorbitan monooleate (Tween 60), polyoxyethylenesorbitan trioleate (Tween 80), polyoxyethylenesorbitan monostearate, alkyltrimethylammonium bromides, dodecyltrimethylammonium bromide, hexadecyltrimethylammonium bromide, mixed alkyltrimethylammonium bromide, tetradecyltrimethylammonium bromide, benzalkonium chloride, benzethonium chloride, benzyldimethyldodecylammonium bromide, benzyldimethylhexadecylammonium bromide, benzyltrimethylammonium chloride, benzyltrimethylammonium methoxide, cetylpyridinium bromide, cetylpyridinium chloride, cetyltributylphosphonium bromide, cetyltrimethylammonium bromide decamethonium bromide, dimethyldioctadecylammonium bromide, methylbenzethonium chloride, methyl mixed trialkyl ammonium chloride, methyltrioctylammonium chloride, n,n', mb'-polyethylene(10)-n-tallow-1,3-diaminopropane and 4-picoline dodecyl sulfate. In the most preferred form of the invention, the nonionic surfactant is selected from the group consisting of polyoxyethylenesorbitan monooleate (Tween 60) and polyoxyethylenesorbitan trioleate (Tween 80).

For purposes of the present invention, the term "antioxidant agent" includes antioxidant compounds that are compatible with and suitable for use in animal feeds. Useful antioxidant agents include, for example, butylated hydroxyanisole (BHA), butylated hydroxytoluene (BHT), ethoxyquin, propyl gallate, tertiary butyl hydroquinone (TBHQ), tocopherols and the like. The antioxidant agents will generally be employed in the particulate feed additive coatings of the invention in amounts effective to substantially increase the shelf life of the feed additives, such as by substantially reducing the rate of rancidity conversion in the surfactant materials of the invention. Useful amounts of the antioxidant agents will generally range from about 50 to about 5000 ppm, more preferably from about 100 to about 2000 ppm, and most preferably from about 200 to about 1000 ppm, based on the surfactant solution employed to coat the particulate feed additive material.

In one embodiment of the invention, the surfactant and antioxidant agents of the invention are with mixed a particulate carrier substrate so that a coating is formed on the carrier substrate comprising about 10% to about 70% (wt/wt), more preferably about 20% to about 65% (wt/wt) and most preferably about 40% to about 60% (wt/wt) of surfactant based on the combined weight of the particulate carrier material and coating. A particularly useful amount of surfactant/ antioxidant coating material is about 50% (wt/wt) based on the combined weight of the coated product. Particulate carrier materials useful as a substrate for the surfactant/antioxidant coating of the invention include substantially inert particulate carrier materials that are suitable for feed additive applications. Suitable particulate carrier materials include, but are not limited to celite, diatomaceous earth, and silica. Specific, non-limiting examples of useful carriers include, for example, celite (Fisher Scientific Co., New Jersey, USA), diatomaceous earth (Sigma Chemical Co. St. Louis, MO) and Lucta-Carrier™ silica (Lucta, S.A., Barcelona, Spain).

The coated particulate feed additive of the invention formed as described above may be added to animal feed in an amount sufficient to enhance feed utilization efficiency in the animals. For purposes of the present invention, effective amounts of the particulate feed additive, when mixed with the animal feed, will typically be about 40 to about 120 g of the particulate feed additive per cow per day, more preferably from about 60 to about 100 g of the particulate feed additive per cow per day. Effective amounts of the liquid feed additives of the invention, when mixed with the animal feed, will typically be about 20 to about 60 g of the liquid feed additive per cow per day, more preferably from about 30 to about 50 g of the liquid feed additive per cow per day.

Feedstuff or feed useful in the practice of the present invention includes forages and grain feeds, such as grass and legume forages, crop residues, cereal grains, legume by-products and other agricultural by-products. In situations where the resulting feed is to be processed or preserved, the feed may be treated with the surfactant and/or enzyme before processing or preservation. Processing may include drying, ensiling, chopping, pelleting, cubing or baling in the case of forages, and in the case of grains and legume seeds by rolling, tempering, grinding, cracking, popping, extruding, pelleting, cubing, micronizing, roasting, flaking, cooking and or exploding.

As used herein, "forages" include the cut aerial portion of a plant material, both monocotyledonous and dicotyledonous, used as animal feed. Examples include, without limitation, orchard grass, timothy, tall fescue, ryegrass, alfalfa, sainfoin, clovers and vetches.

As used herein, "grain feeds," means the seeds of plants that are fed to ruminant animals and may or may not include the outer hull, pod or husk of the seed. Examples include, without limitation, corn, wheat, barley sorghum, triticale, rye, canola, and Soya beans.

The present invention may be combined with other feed processing techniques or preservation methods, and may be included either during processing or preservation. Other processing techniques useful in combination with the present invention include, but not limited to, drying, ensiling, chopping, grinding, pelleting, cubing or baling in the case of forages, and in the case of grains feeds and legume seeds by drying, rolling, tempering, grinding, cracking, popping, extruding, pelleting, cubing, micronizing, roasting, flaking, cooking and or exploding. Preservation may include, but not limited to ensiling and haymaking.

The improved particulate feed additive of the invention is preferably evenly applied to the feed material. The resulting feed can either be fed immediately to livestock or stored and fed at a later time. The resulting feed composition is effective for prolonged periods of time, such as for at least three years or longer depending on the nature of the feed composition, storage conditions and the like.

In addition to feed and the particulate or liquid feed additive described above, the compositions of the invention may further comprise one or more additional agents that enhance the ruminant digestive processes. Such agents include, for example, pyrodoxal 5-phosphate, fumaric acid and its salts, sorbic acid and its salts, parabenzoic acid esters, benzoic acid, polydimethyl siloxane-polyethers, unsaturated alcohols, bentonite, proteolytic and/or carbohydrase enzymes, such as glycanase, hemicellase, cellulase, pectinase, xylanase and amylase, lactic acid bacteria inoculants, such as those comprising *Lactobacillus casei, L. acidophilus, L. salivarius, L. corymiformis subsp coryniformis, L. curvatus, L. plantarum L. brevis, L. buchneri, L. fermentum. L. viridescens, Pdiococcus acidilacti, P. cerevisiae, P. pentosaceus, Streptococcus faecalis, S. faecium, S. lactis, L. buchneri, L. fermentum, L. viridenscens, L. delbrueckiin, Leuconostoc cremoris, L. dextranicum, L. mesenteroides* or *L. citrovorum,* and polyether carboxylic acid ionophore antibiotics, such as monensin (see, e.g., Westley, *Ado Appl. Microbiology* **22**:177-223 (1977)). Where the surfactant is used in conjunction with exogenous glycanases, the method of producing feed compositions in the present invention is most effective when surfactant constitute on the order of about 0.01% of the dry weight of the feed. In situations where the surfactant is used without exogenous enzymes, the compositions are most effective when the surfactant concentration does not exceed about 0.2% of the dry weight of the feed.

<u>Example 1</u>

<u>Accelerated Oxidation Tests</u>

Solid silica particles (LuctaCarrier™ silica, Lucta, S.A., Barcelona, Spain) are coated 50% wt/wt (based of the combined weight of the particles and coating) with a mixture of polyethylene 20 sorbitan monooleate (Polysorbate 80) and an amount of the antioxidants set forth in the tables, below, or no antioxidant as a control. The liquid antioxidants (e.g., ethoxyquin) are mixed directly with the Polysorbate 80 at the concentrations set forth in the tables. The solid antioxidants (e.g., BHA or BHT) are dissolved in a suitable solvent (e.g., ethyl alcohol) and then mixed with the Polysorbate 80 at the listed concentration levels. The oxidative stability of the coating is then determined using the Rancimat test. Oxidative stability relates to how easily components of oil oxidize which creates off-flavors in the oil, and is measured by instrumental analysis using accelerated oxidation methods. American Oil Chemists' Society Official Method Cd 12-57 for Fat Stability: Active Oxygen Method (re'vd 1989); Rancimat (Laubli, M. W. and Bruttel, P. A., JOACS 63:792-795 (1986)); Joyner, N. T. and J. E. McIntyre, Oil and Soap (1938) 15:184 (modification of the Schaal oven test). The Rancimat method has been developed as the automated version of the AOM method (active oxygen method) for the determination of the induction time of fats and oils. In this method the highly volatile organic acids produced by autoxidation are absorbed in water and used to indicate the induction time. As used in the following tables, the abbreviations have the following meanings:

BHT = butylated hydroxytoluene
BHA = butylated hydroxyanisole
EQ = ethoxyquin

Table 1

| Antioxidant | Concentration (ppm) | Rancimat Stability (hours) |
|---|---|---|
| Control | None | 1.5 |
| BHT | 200 | 1.75 |
| BHT + BHA | 100 + 100 | 3.85 |
| BHT + tocopherols | 200 + 200 | 3.90 |

Table 2

| Antioxidant | Concentration (ppm) | Rancimat Stability (hours) |
|---|---|---|
| Control | None | 1.5 |
| BHT | 200 | 1.85 |
| BHT + BHA | 100 + 100 | 3.85 |
| BHT + tocopherols | 200 + 200 | 6.05 |

Table 3

| Antioxidant | Concentration (ppm) | Rancimat Stability (hours) |
|---|---|---|
| Control | None | 2.5 |
| BHT | 200 | 4.45 |
| BHT + BHA | 100 + 100 | 14.20 |
| BHT + tocopherols | 200 + 200 | 24.15 |

#### Table 4

| Antioxidant | Concentration (ppm) | Rancimat Stability (hours) |
|---|---|---|
| Control | None | 2.5 |
| BHT | 200 | 6.15 |
| BHT + BHA | 100 + 100 | 17.35 |
| BHT + tocopherols | 200 + 200 | 15.75 |
| EQ | 200 | 42.70 |
| EQ | 500 | 60.60 |
| EQ | 1000 | 87.50 |

#### Table 5

| Antioxidant | Concentration (ppm) | Rancimat Stability (hours) |
|---|---|---|
| Control | None | 1.70 |
| EQ | 1000 | 79.40 |

#### Table 6

| Antioxidant | Concentration (ppm) | Rancimat Stability (hours) |
|---|---|---|
| Control | None | 1.70 |
| EQ | 1000 | 97.20 |

Example 2

Accelerated Oxidation/

Shelf Life test

The nonionic surfactant polyoxyethylene 20 sorbitan monooleate (Polysorbate 80) is coated in an amount of 50% wt/wt onto silica particles (i.e., in the proportion 50 g. of Polysorbate 80 per 50 g. of silica), either without (control) or with added antioxidant. A shelf life test is performed by measuring, using a sensory panel, the level of rancid odor of samples stored at 40°C., with a rancidity score being assigned to each sample (with a score of 0 for no rancid odors and 10 for highest level of rancid odors. The results are shown in Table 7, below.

#### Table 7

| Antioxidant | Concentration (ppm) | Rancidity Score | | | |
|---|---|---|---|---|---|
| | | 1 week | 2 weeks | 6 weeks | 10 weeks |
| Control | | 3.0 | 6.0 | 9.0 | 10.0 |
| EQ | 1000 | 1.0 | 2.0 | 3.5 | 5.0 |
| BHT + EQ | 200 + 200 | 2.0 | 3.5 | 5.0 | 7.5 |

Example 3

Field Trial

Ruminating animals have a capability for the digestion of dietary fibre components, because of microbial fermentation in the rumen. However, feed conversion ratio can be improved if the diet is supplemented with one or more nutritionally active ingredients such as enzymes, buffers, essential oils, vitamins and amino acids. The improvement of the diet digestibility is associated with increase of feed intake, which is especially significant during the first stage of lactation. In accordance with the present invention, antioxidant stabilized surfactant feed additives are used increase milk yield and also cause an improvement of the body condition, as less nutrients would have to be mobilized from the cow's own tissues.

To field test the present invention, a feed additive, described herein as Feed Additive A, was developed based on a combination of nutritionally active compounds for dairy cows, composed of a vitamin supplement, essential oils, palatability enhancers, a non-ionic surface-active agent and an antioxidant. The specific formulation of Feed Additive A is as follows:

Feed Additive A Composition

| Component | % by Weight |
| --- | --- |
| Polysorbate 80 | 53.3 |
| Silicon dioxide (E551b) | 42.84 |
| Niacin | 3.0 |
| Flavoring substances | 0.8 |
| Ethoxyquin | 0.06 |
| *rosemary oil (alfa-pinene), eucalyptus oil (cineole), clove essential oil (eugenol), p-anisaldehyde, gamma-undecalactone, benzyl alcohol, cinnamaldehyde, benzaldehyde | |

Niacin was included in the formulation since niacin supplementation to high production dairy cows improves their metabolic efficiency by reducing fat and body protein mobilisation and increasing glucose plasma levels. This causes a higher milk yield (Jaster, E.A. et al., "Feeding supplemental niacin for milk production in six dairy herds" J. Dairy Sci., 63:1737 (1983)), increase of milk fat (Fronk, T.J. et al., "Effect of dry period overconditioning on subsequent metabolic disorders and performance of dairy cows" J. Dairy Sci. 62:1804 (1980)) and protein (Cervantes, A. et al., "Effects of nicotinamide on milk composition and production in dairy cows fed supplemental fat" J. Dairy Sci. 79:105 (1996)), especially during the hot season (Muller, L.D. et al., "Supplemental niacin for lactating cows during summer feeding" J. Dairy Sci., 69:1416 (1986)). The effects of the niacin supplementation might be more significant during the lactation's first stage of heifers, and under heat stress conditions (NRC. Nutrient requirements of dairy cattle. 6th revised edition. National Academy Press. Washington, D.C., pp. 47 (1989)).

A field trial of the formulation was carried out on "Las Traviesas" farm (Saprogal, Spain) for a full lactation period. In the field trial, a total of 100 cows were classified into two groups according to their parturition number:

1. first parturition ($G_1$ or *Heifer*)
2. more than one parturition ($G_2$ or *Mature*)

When the calving period started, each animal was assigned to any of two treatments:

**$T_1$ or Control**: Without Feed Additive A
**$T_2$ or Feed Additive A**: With 80 g/cow/day of Feed Additive A

The number of individuals in either group (*Heifer vs. Mature*) assigned to either treatment (Table 8) shows a slight imbalance, as the Feed Additive A treatment included 60% heifers while the control treatment included 52% heifers. The number of records by lactation is similar for both groups, allowing for good predictions until 305 days. When the controls were ended, 40% of all cows were more than 300 days in lactation, there were records for at least one full lactation and more than 65% of all animals were more than 250 days into lactation. The data from cows not having at least 3 complete records at the end of the experimental period (milk production and milk analysis) were not considered for the statistical analysis.

Table 8

Animal distribution and records analyzed by group and treatment (includes the milk control on 19/11/00)

| | Control | | | Feed Additive A | | |
|---|---|---|---|---|---|---|
| | Heifer | Mature | Total | Heifer | Mature | Total |
| No. of animals | 27 | 25 | 52 | 29 | 19 | 48 |
| No. records | 222 | 180 | 402 | 231 | 136 | 367 |
| Records/cow, ave. | 8.2 | 7.2 | 7.7 | 8.0 | 7.2 | 7.6 |

Feed Additive A was supplied as follows. A feed was prepared into which 840 kg of wheat were mixed with 160 kg of Feed Additive A, and the mixture was pelleted. 500 g of the pelleted mixture was daily delivered to $T_2$ animals, thereby supplying 80 g Feed Additive A plus 420 g of wheat. The cows from group $T_1$ (no Feed Additive A) received 420 gram of wheat daily to balance the amount of this cereal contained in treatment $T_2$ (Feed Additive A).

The animals were cared for following the routine practices in the farm, including two milking periods each day, in the morning and in the afternoon.

The feeding management included a base ration for lactation that covered up to 25 kg milk daily that was delivered to all cows twice a day. Its ingredient and nutrient composition are included in Tables 9A and 9B.

Table 9A

Base Ration Ingredient Composition

| Ingredient | kg/cow/day, dry matter |
|---|---|
| Gluten feed | 15.0 |
| Wheat | 21.6 |
| Lupines | 6.2 |
| Maize | 10.0 |
| D.D.G. | 5.0 |
| Soya bean meal 44% | 23.0 |
| Palm meal | 10.0 |
| Fish meal, 65% | 2.0 |
| Dairy premix | 7.2 |
| Cost, US$/t | 151 |

Table 9A

Base Ration Nutrient Composition

| Production feed nutritional analysis | Amount |
|---|---|
| Dry matter, % | 89.06 |
| Crude protein, % | 22.00 |
| PDIE, % | 130.0 |
| PDIN, % | 151.1 |
| PDIA | 77.7 |
| Ash, % | 7.33 |
| Starch, % | 23.00 |
| A.D.F., % | 9.86 |
| N.D.F., % | 20.82 |
| Crude fat, % | 6.02 |
| U.F.L./kg | 105.1 |

This base ration was supplemented with the production feed (whose composition is included into Tables 9C and 9D), at a ratio of 1 kg feed per 2.5 kg of extra milk produced above the 25 kg base level.

Table 9C
Production Feed Ingredient Composition

| Ingredient | kg/cow/day, dry matter |
|---|---|
| Gluten feed | 15.0 |
| Wheat | 21.6 |
| Lupines | 6.2 |
| Maize | 10.0 |
| D.D.G. | 5.0 |
| Soya bean meal 44% | 23.0 |
| Palm meal | 10.0 |
| Fish meal, 65% | 2.0 |
| Dairy premix | 7.2 |
| Cost, US$/t | 151 |

Table 9D
Production Feed Nutrient Composition

| Base ration nutritional analysis | Amount |
|---|---|
| Dry matter, % | 89.06 |
| Crude protein, % | 22.00 |
| PDIE, % | 130.0 |
| PDIN, % | 151.1 |
| PDIA | 77.7 |
| Ash, % | 7.33 |
| Starch, % | 23.00 |
| A.D.F., % | 9.86 |
| N.D.F., % | 20.82 |
| Crude fat, % | 6.02 |
| U.F.L./kg | 105.1 |

Feed Additive A was supplied as a wheat-based, pelleted feed and dosed at 500 g of pellet/cow/day. The Feed Additive A-containing feed pellets substituted an equivalent amount of production feed. The cows with a milk yield lower than 25 kg/day and that therefore did not receive production feed, were only given a base ration supplemented with the Feed Additive A/wheat mixture. The nutritional composition of the Feed Additive A/wheat mixture is set forth in Tables 10A and 10B.

Table 10
Wheat/Feed Additive A Mix Nutritional Analysis

| Nutritional Analysis | Amount |
|---|---|
| Dry matter, % | 67.90 |
| Crude protein, % | 8.40 |
| PDIE, % | 7.30 |
| PDIN, % | 5.50 |
| Nitrogen Free Extract, % | 52.30 |
| Starch, % | 45.90 |
| Crude fibre, % | 1.80 |
| A.D.F., % | 2.60 |
| N.D.F., % | 9.80 |
| Calcium, % | 0.03 |
| Total P, % | 0.28 |

(continued)

Wheat/Feed Additive A Mix Nutritional Analysis

| Nutritional Analysis | Amount |
|---|---|
| Crude fat, % | 3.60 |
| Metabolisable energy, kcal/kg | 2381 |
| Net energy lactation, kcal/kg | 1427 |
| U.F.L./kg | 0.87 |

The following parameters were recorded and analyzed:

**Milk production**: the amount of milk yield per cow/day, using the monthly yield control from the farm.
**Milk quality**: protein and fat analysis and somatic cell count on a monthly basic.
**Body weight**: assessment of body weight changes every two months from the beginning to the end of the lactation period, using chest perimeter measurement with weigh tape.
**Interval calving/fecundation (fertility index)**: the time between calving and first fertile service was determined. Those cows that were not pregnant at the end of the experiment were removed from the statistical analysis.
**Cow Judging**: including limb assessment, udder and final morphological rating. Statistical Analysis

For the statistical analysis of daily milk yield (MY, kg/day) the SAS MIXED procedure (Littell, R. C. et al., SAS System for Mixed Models, Cary, NC, SAS Institute Inc. 1996) was used for the development of a fourth degree polynomial model, depending on the lactation day, and with random regression coefficients. The model uses as fixed effects Treatment (Control vs. Feed Additive A) and Group (Heifer vs. Mature).

Fat, protein and the evolution of somatic cells count were adjusted to a third degree polynomial equation. The somatic cell count was transformed into "Linear Score" that takes the logarithm function of counts into consideration according to the following formula:

$$Linear\ Score = \frac{Log\,(Cell\ count\ x\,10^3}{Log\ 2}$$

The use of random coefficients on the models allow the regression coefficients to vary from animal to animal, each coefficient being constituted by a fixed segment, and a random segment that changes according to a distribution estimated by the model itself. Additionally, this model accounts for the repeated measurements on a single animal and allows comparing the differences existing in any given point between two curves. A third feature is the possibility of coefficient comparison from the equations but such option was discarded, as these coefficients do not have any biological significance.

Results And Discussion

Analysis of morphological score

Each animal was scored for feet and leg, udder composite and final global scoring, with the aim of detecting possible differences at the origin or random differences between groups and treatments. Even if this value has lower accuracy than the ICO genetic value that includes a weighed calculation of productive parameters (10% kg of fat + 51% kg of protein + 5% percent of protein) and score values (4% for limbs + 15% for the udder + 15% final morphological score), the morphological score alone is considered to be a correlated indicator for genetic potential. This value tends to underscore the animals on its first parturition; therefore it is normal to observe lower values for heifers than for mature animals in this experiment. However, no significant differences among treatments were detected in the experiment (76.2 vs. 76.7; Table 11), so it is assumed that the genetic potential of both groups was balanced at the origin and does not interfere with Feed Additive A assessment.

Table 11

Morphological Score

|  | Control | | Feed Additive A | |
|---|---|---|---|---|
|  | Heifer | Mature | Heifer | Mature |
| Genetic value | 75.1 | 77.1 | 75.5 | 78.1 |
| Average | 76.2 | | 76.7 | |

Analysis of daily and cumulative productions

The control cows of the farm were of high yield with a production peak close to 40 kg/cow/day for heifers plus mature animals (Table 12), and a cumulative production of 9429 kg/cow in 305 days (Table 12). These data equal to an average production of 31 kg of milk per cow/day.

Table 12

Comparison of milk production in kg/day on successive lactation days, by treatment

| Day | Control | Feed Additive A | Difference, kg | Difference, % | t |
|---|---|---|---|---|---|
| 10 | 28.8 | 29.2 | 0.28 | 1.1 | 0.553 |
| 30 | 34.6 | 35.5 | 0.81 | 2.6 | 0.457 |
| 60 | 38.9 | 40.5 | 1.59 | 4.1 | 0.298 |
| 90 | 39.3 | 41.4 | 2.31 | 5.4 | 0.157 |
| 100 | 38.9 | 41.1 | 2.53 | 5.8 | 0.122 |
| **120** | **37.4** | **39.9** | **2.96** | **6.8** | **0.071** |
| **150** | **30.6** | **33.8** | **3.52** | **10.2** | **0.032** |
| **180** | **28.3** | **31.6** | **3.98** | **. 11.5** | **0.016** |
| **200** | **27.2** | **30.5** | **4.21** | **12.1** | **0.011** |
| **210** | **24.2** | **27.6** | **4.30** | **14.1** | **0.010** |
| **240** | **23.3** | **26.7** | **4.46** | **14.7** | **0.014** |
| **270** | **21.5** | **25.0** | **4.42** | **15.9** | **0.032** |
| **300** | **18.9** | **22.2** | **4.15** | **18.5** | **0.096** |
| 305 | 18.4 | 21.7 | 4.08 | 17.8 | 0.115 |

Feed Additive A supplementation resulted into important yield increases from the 30th lactation day onwards (0.81 kg/cow/day, equalling to an average increase of 2.6%). The results started to be statistically significant from the fourth lactation month onwards, with increases of up to 3 kg/cow/day, (6.8%; Table 12). From day 300 onwards, yield increases (17.8%; Table 12), but they are no longer statistically significant because of an increased variability and the decrease on the number of animals reaching this late stage of the lactation curve.

Table 13

Comparison of milk production in kg/day on successive lactation days, by group and treatment

| Day | Heifer | | | | Mature | | | |
|---|---|---|---|---|---|---|---|---|
|  | Control | Feed Additive A | Diff. kg/d | Diff. % | Control | Feed Additive A | Diff. kg/d | Diff. % |
| 10 | 23.4 | 24.1 | 0.7 | 3.2 | 34.3 | 34.2 | -0.1 | -0.3 |
| 30 | 29.2 | 31.1 | 2.0 | 6.7 | 40.1 | 39.9 | -0.2 | -0.4 |
| 60 | 33.8 | 37.0 | 3.2 | 9.4 | 43.9 | 43.9 | 0.0 | 0.0 |
| 90 | 35.1 | 38.9 | 3.9 | 11.1 | 43.6 | 44.0 | 0.4 | 0.8 |
| 100 | 34.9 | 39.0 | 4.0 | 11.5 | 42.8 | 43.3 | 0.5 | 1.2 |
| 120 | 34.2 | 38.4 | 4.2 | 12.4 | 40.6 | 41.4 | 0.8 | 2.1 |
| 150 | 30.1 | 34.6 | 4.5 | 15.0 | 31.2 | 32.9 | 1.7 | 5.5 |
| 180 | 28.7 | 33.3 | 4.6 | 15.9 | 27.9 | 29.8 | 1.9 | 6.9 |
| 200 | 28.1 | 32.7 | 4.6 | 16.4 | 26.3 | 28.3 | 2.0 | 7.6 |

(continued)

Comparison of milk production in kg/day on successive lactation days, by group and treatment

| Day | Heifer | | | | Mature | | | |
|---|---|---|---|---|---|---|---|---|
| | Control | Feed Additive A | Diff. kg/d | Diff. % | Control | Feed Additive A | Diff. kg/d | Diff. % |
| 210 | 26.5 | 31.2 | 4.7 | 17.9 | 21.9 | 24.0 | 2.1 | 9.6 |
| 240 | 26.0 | 30.7 | 4.8 | 18.4 | 20.6 | 22.7 | 2.1 | 10.1 |
| 270 | 25.0 | 29.9 | 4.9 | 19.4 | 18.0 | 20.0 | 2.0 | 11.0 |
| 300 | 23.4 | 28.4 | 5.0 | 21.2 | 14.4 | 16.1 | 1.7 | 11.5 |
| 305 | 23.1 | 28.1 | 5.0 | 21.6 | 13.8 | 15.4 | 1.6 | 11.5 |

Analyzing by group the results of Feed Additive A addition, it is clear that first parturition cows show better response than cows (21.6% vs. 11.5%; Table 13). The analysis of cumulative milk production shows the same trend than the daily production: the effect of Feed Additive A supplementation is highly significant from the first month of lactation. The cumulative milk production at 305 days improves by 8.1%, or 767 kg of milk per cow. It is evident the higher level of response from the animals on the *Heifer* group than the animals from the *Mature* group, 13.3% versus 3.4%, respectively (see Table 15).

Table 14

Cumulative milk production in kg and percent differences in successive lactation days, according to treatment

| Day | Control | Feed Additive A | Diff., kg/cow | Diff., % | t |
|---|---|---|---|---|---|
| 10 | 269 | 271 | 1.6 | 0.6% | 0.142 |
| 30 | 908 | 922 | 14.0 | 1.5% | 0.119 |
| **60** | **2022** | **2074** | **51.7** | **2.6%** | **0.086** |
| **90** | **3203** | **3311** | **107.7** | **3.4%** | **0.057** |
| **100** | **3594** | **3724** | **129.6** | **3.6%** | **0.049** |
| **120** | **4358** | **4536** | **177.8** | **4.1%** | **0.036** |
| **150** | **6407** | **6756** | **340.1** | **5.4%** | **0.021** |
| **180** | **6996** | **7409** | **412.8** | **5.9%** | **0.012** |
| **200** | **7274** | **7719** | **445.6** | **6.7%** | **0.008** |
| **210** | **8044** | **8590** | **546.5** | **6.8%** | **0.007** |
| **240** | **8281** | **8862** | **580.7** | **7.0%** | **0.004** |
| **270** | **8729** | **9378** | **649.3** | **7.4%** | **0.003** |
| **300** | **9336** | **10087** | **750.8** | **8.0%** | **0.002** |
| **305** | **9429** | **10197** | **767.3** | **8.1%** | **0.002** |

Table 15

Cumulative milk production in kg/cow and differences existing among treatments (kg/cow and %) by group

| Day | Heifer | | | | Mature | | | |
|---|---|---|---|---|---|---|---|---|
| | Control | Feed Additive A | Diff., kg/cow | Diff., % | Control | Feed Additive A | Diff., kg/cow | Diff., % |
| 10 | 215 | 218 | 3.8 | 1.8% | 324 | 323 | -0.5 | -0.2% |
| 30 | 744 | 776 | 31.5 | 4.2% | 1073 | 1069 | -3.4 | -0.3% |
| 60 | 1700 | 1809 | 109.9 | 6.5% | 2345 | 2339 | -6.5 | -0.3% |
| 90 | 2739 | 2956 | 216.7 | 7.9% | 3666 | 3665 | -1.4 | 0.0% |
| 100 | 3090 | 3346 | 256.2 | 8.3% | 4099 | 4102 | 3.0 | 0.1% |
| 120 | 3782 | 4121 | 339.1 | 9.0% | 4934 | 4950 | 16.5 | 0.3% |
| 150 | 5717 | 6321 | 603.7 | 10.6% | 7097 | 7191 | 94.4 | 1.3% |
| 180 | 6305 | 7000 | 694.7 | 11.0% | 7687 | 7818 | 130.9 | 1.7% |

(continued)

Cumulative milk production in kg/cow and differences existing among treatments (kg/cow and %) by group

| | Heifer | | | | Mature | | | |
|---|---|---|---|---|---|---|---|---|
| Day | Control | Feed Additive A | Diff., kg/cow | Diff., % | Control | Feed Additive A | Diff., kg/cow | Diff., % |
| 200 | 6589 | 7330 | 740.7 | 11.2% | 7958 | 8109 | 150.5 | 1.9% |
| 210 | 7407 | 8288 | 880.7 | 11.9% | 8680 | 8893 | 212.3 | 2.4% |
| 240 | 7669 | 8598 | 928.1 | 12.1% | 8893 | 9126 | 233.3 | 2.6% |
| 270 | 8179 | 9204 | 1024.4 | 12.5% | 9278 | 9552 | 274.2 | 3.0% |
| 300 | 8907 | 10079 | 1172.0 | 13.2% | 9765 | 10094 | 329.5 | 3.4% |
| 305 | 9024 | 10220 | 1196.9 | 13.3% | 9835 | 10173 | 337.5 | 3.4% |

Figure 3 presents a curve of estimation of differences between control and Feed Additive A as cumulative milk, in kg, per cow and lactation. The third degree equation is a good predictive tool that follows the lactation day, as its R squared shows very high value.

$$y = -0.0184x3 + 1.3849x2 - 1.1995x - 1.241$$
$$R^2 = 0.9999$$

Analysis of values and curves for fat, protein and Somatic Cell Count

As shown in Table 16, the percent of milk protein is not influenced by group effect (*Heifer vs. Mature*). However, the fat percent is influenced, as the *Heifer* group shows significantly higher fat values than the *Mature* group. Treatment comparisons (control vs. Feed Additive A) do not show differences in protein or fat composition. Standardisation of milk production by fat values (3.7% or 4% fat as reference value) does not provide any improvement to the statistical analysis, due probably to the high variability of milk fat values obtained from individual cows (data not shown). Additionally, fat and protein standardisation is usually performed on cumulative production from 305-day lactations, on average protein or fat values, and not on daily milk values.

Table 16

Average of squared minimum for protein, fat and Somatic Cell Count values, by group and treatment

| | Group | | | Treatment | | |
|---|---|---|---|---|---|---|
| | Heifer | Mature | Diff.[1] | Control | Feed Additive A | Diff.[1] |
| Protein, % | 3.23 ±0.184 | 3.32 ±0.293 | ns | 3.30 ±0.253 | 3.24 ±0.223 | ns |
| Fat, % | 4.5 ±0.283 | 4.18 ±0.296 | *** | 4.38 ±0.276 | 4.30 ±0.279 | ns |
| Linear Score, (Somatic Cells)[2] | 3.18 ±0.363 | 4.64 ±0.446 | *** | 3.58 ±0.436 | 4.24 ±0.376 | * |

1 ns; not significant; *: p<0.05; **; p <0.01; ***: p<0.001
2 Computed following a log function from Somatic Cell Count, after Lundeen, T., "Mastitis management: monitoring SCC reduces mastitis incidence," Feedstuffs, 9:January 8, 2001.

The average protein values do not show significant differences. However, in *Mature* cows the analysis of the values curve resulted in significant differences from day 170 to day 250 into the lactation. This indicates that, for that period, the *Mature* Feed Additive A-fed cows produce milk with a protein content 0.1% lower than the control group (Table 17). This decrease was not identified in either *Heifers* or in the total animal assay pool, as indicated in the previous comments for Table 16. The curve far protein content in milk shows a steady decrease, parallel to the increase of milk production common to the two groups and treatments. The cumulative net protein production is higher in Feed Additive A-fed cows, because of the significant increase of milk yield from those animals.

Table 17

Comparison of milk protein content, by group and treatment

| Day | Heifer | | | | Mature | | | |
|---|---|---|---|---|---|---|---|---|
| | Control | Feed Additive A | Diff. | t | Control | Feed Additive A | Diff. | t |
| 10 | 3.8 | 3.07 | 0.00 | 0.794 | 3.14 | 3.15 | -0.01 | 0.194 |
| 30 | 3.05 | 3.04 | 0.01 | 0.719 | 3.06 | 3.09 | -0.03 | 0.294 |
| 60 | 3.05 | 3.03 | 0.02 | 0.598 | 3.01 | 3.03 | -0.02 | 0.586 |
| 90 | 3.07 | 3.04 | 0.03 | 0.485 | 3.03 | 3.03 | 0.01 | 0.898 |
| 100 | 3.08 | 3.04 | 0.04 | 0.454 | 3.05 | 3.03 | 0.02 | 0.706 |
| 120 | 3.11 | 3.07 | 0.04 | 0.407 | 3.10 | 3.06 | 0.05 | 0.384 |
| 150 | 3.18 | 3.12 | 0.05 | 0.380 | 3.22 | 3.12 | 0.09 | 0.139 |
| **180** | 3.25 | 3.19 | 0.06 | 0.406 | **3.36** | **3.22** | **0.14** | **0.068** |
| **200** | 3.31 | 3.19 | 0.06 | 0.450 | **3.46** | **3.30** | **0.16** | **0.057** |
| **210** | 3.33 | 3.28 | 0.06 | 0.480 | **3.51** | **3.34** | **0.17** | **0.056** |
| **240** | 3.42 | 3.37 | 0.05 | 0.602 | **3.67** | **3.49** | **0.18** | **0.077** |
| 270 | 3.50 | 3.47 | 0.03 | 0.778 | 3.81 | 3.65 | 0.17 | 0.157 |
| 300 | 3.57 | 3.57 | 0.00 | 0.992 | 3.94 | 3.82 | 0.12 | 0.400 |
| 305 | 3.58 | 3.58 | -0.01 | 0.951 | 3.95 | 3.85 | 0.10 | 0.466 |

As far as milk fat is concerned, there were no significant differences between treatments in either *Heifers* or *Mature* cows or in both groups taken together. However, the differences from *Mature* cows indicate a certain trend towards a slight decrease in fat content associated to Feed Additive A treatment. As with protein, the cumulative total fat production was higher in the Feed Additive A-fed cows due to the significantly higher milk yield of these animals. Due to the differences in the individual variations there were no significant differences between treatment and group, although differences between groups existed when analyzing absolute averages.

Table 18

Main equivalence of the Lineal Index ("Linear Score" LS) for Somatic Cell Count (SCC).

| Linear Score | 0 | 1 | 2 | 3 | 4 | 5 | 6 | 7 | 8 | 9 |
|---|---|---|---|---|---|---|---|---|---|---|
| S.C.C., x $10^3$ | 12.5 | 25 | 50 | 100 | 200 | 400 | 800 | 1600 | 3200 | 6400 |
| Adapted from Lundeen, 2001, *supra* | | | | | | | | | | |

As far as the Somatic Cell Count (SCC) is concerned, the statistical analysis was carried out on a linear index ("linear score" - LS). This value is computed from the logarithm function of the actual value of cell count (see Section 3). The correlation between LS and SCC are set into Table 18, adapted from the work of Lundeen (2001). LS differences were significant between both *Heifers* and *Mature* (P<0.01) and between treatments (P<0.05), and associated to a higher index in the Feed Additive A treatment. At day 305, the average difference is 0.66 lineal points (see Table 16). The SCC was not included as parameter for the initial cow classification which caused the animals in the Feed Additive A group to have higher initial counts, which were carried over the entire lactation. The general farm records confirmed that the *Mature* cows (more than one parturition) show LS-SCC levels higher than 4.0, irrespective of treatment. These levels can be considered quasi pathological. Levels higher than 6.0 lineal points are indicative of clinical mastitis, that were identified in 8 animals fed Feed Additive A and in four central animals. On the other hand, the difference of SCC causes a decrease on the economic performance of the Feed Additive A treatment. As reported by the American National Mastitis Council, every point of increase in the LS reduces the total lactation milk yield by 100 kg in first parturition cows and by 200 kg in cows with more than one parturition. These values average 0.35 y 0.70 kg/cow/day respectively.

Body condition and calving-to-pregnancy interval

As estimation of body condition, each animal had its barrel perimeter recorded at the beginning of the experiment and every two/three month thereafter. This way there were some four measurements from each animal at the end of the lactation period. Data analysis shows, however, that the method is not sufficiently accurate and that there is very wide variability even at individual level.

As for fertility, the time lag between calving and the first fertile service was used as indicator. At the end of the trial and using the fertility data to January 2001, the farm's average was 140 days, a bit over the optimal and that set the calving-to-calving interval clearly over 400 days. This might be because of IBR infection interference, a fact suggested by the farm's veterinary services. The study shows that more control cows were open at the end of the trial with more than 150 days (19.2% of control cows and 12.5% of Feed Additive A cows).

There were no important differences between groups on the calving-to-pregnancy interval (3.0 days less for *Heifers*) but the differences between treatments were significant, with a pooled average of 24.7 days less for Feed Additive A-fed animals (P=0.1093, Table 11). First parturition animals Feed Additive A-fed responded reducing the calving-to-pregnancy interval by 33.8 days, while the response of more mature animals was somewhat lower, reducing this interval by 9.7 days.

Table 19

Compared results from calving-to-pregnancy interval in days, by group and treatment, and percentage of open cows by treatment

| | Open[1], >150 days | Heifer, days | Mature, days | **Average treatment** | S.D. | **P treatment[2]** |
|---|---|---|---|---|---|---|
| Control, days | 19.2% | 142.0 | 133.2 | **138.5** | 69.3 | 0.109 |
| Feed Additive A, days | 12.5% | 108.2 | 123.5 | **113.8** | 55.8 | |
| **Difference control Feed Additive A** | **6.7%** | **33.8** | **9.7** | **24.7** | | |
| Average, groups | | 125.9 | 128.9 | | | |
| P. groups | 0.888 | | | | | |

1. Percentage of cows open at the end of the trial with more than 150 days from calving.
2. The difference between treatment means was statistically significant (P=0.1093)

General Discussion

The overall assessment of the farm used for the field trial showed a unit with an average milk yield of 31 kg/cow/day with 4.38% fat and 3.30 protein, for a 305-day lactation. SCC values were rather high and especially so in cows with more than one parturition, which had an average linear value of 4.0, bordering the clinical stage. Mastitis with linear values higher than 6.0 was identified on some individuals. The calving-to-pregnancy interval was about 140 days, longer then desirable and the calving to calving interval was found at around 400 days. The veterinary services also diagnosed some cases of IBR (Infectious Bovine Rhynotracheitis).

The supplementation of the diet with Feed Additive A resulted into a highly significant increase in milk yield and a decrease of the calving-to-pregnancy interval. (Table 18). The observed differences in fat and protein content were not significant, but must be included when evaluating the economy of the experiment. The cumulative production of milk fat and protein was favoured by the Feed Additive A treatment. Finally, the SCC analysis shows that Feed Additive A did not influence this parameter, when taking into account the significantly higher (0.7 LS-SCC points, Section 4.3) initial values from the Feed Additive A-treated animals.

Table 20

Summary of compared results for the main parameters in control and treated groups

| | Milk, kg/lactation | | Fat% | | Protein % | | LS-SCC | | Calving-pregnancy interval, days | |
|---|---|---|---|---|---|---|---|---|---|---|
| | Ctrol | FAA[1] | Ctrol | FAA | Ctrol | FAA | Ctrol | FAA | Ctrol | FAA |
| Heifer | 9024 | 10220 | 4.50 | 4.50 | 3.24 | 3.21 | 2.85 | 3.51 | 142 | 108 |
| Mature | 9835 | 10173 | 4.26 | 4.10 | 3.36 | 3.28 | 4.32 | 4.97 | 133 | 124 |
| **H+M** | **9429** | **10197** | **4.38** | **4.80** | **3.80** | **3.24** | **3.58** | **4.24** | **139** | **114** |
| **Difference** | **767** | | **0.08** | | **0.06** | | **0.66** | | **24.7** | |

(continued)

Summary of compared results for the main parameters in control and treated groups

| | Milk, kg/lactation | | Fat% | | Protein % | | LS-SCC | | Calving-pregnancy interval, days | |
|---|---|---|---|---|---|---|---|---|---|---|
| | Ctrol | FAA[1] | Ctrol | FAA | Ctrol | FAA | Ctrol | FAA | Ctrol | FAA |
| P | <0.01 | | >0.10 | | >0.10 | | <0.05 | | -0.11 | |

[1]FAA = Feed Additive A

Conclusions

The field trial appraisal concluded an average milk production of over 9400 kg/cow (4.38% fat and 3.30% protein) for a 305-day lactation. Somatic Cell Count was rather high, especially for cows with more than one parturition, which obtained a lineal index (LI-SCC) of 4.0. The calving to pregnancy intervals were also a bit off optimal levels, being calculated as some 139 days and possibly complicated with IBR infection detected on the farm.

Supplementing the diet with Feed Additive A resulted in a highly significant (P<0.01) improvement in the average milk yield (8.1% or 767 extra kg of milk per cow/lactation), together with a slight, non significant reduction on the fat and protein content to 4.30% and 3.24% respectively. The cows on the Feed Additive A group started the experiment with a lineal index of somatic cells 0.7 points higher than the control cows, this factor being a random effect exclusively. The differences in somatic cell count were stable throughout the experiment and it is concluded that Feed Additive A did not influenced this parameter. Finally, Feed Additive A caused a statistically significant (P=0.11) decrease of the calving-to-pregnancy interval, by 25 days.

The economical appraisal of this experiment, with a base milk price of US$0.258/1, calf value at US$172.20 and excluding the product cost, is positive for the Feed Additive A-fed cows by more than US$233 per cow and lactation.

Literature References

Akin, D.E. 1980. Evaluation by electron microscopy and anaerobic culture of types of rumen bacteria associated with digestion of forage cell walls. Appl. Environ. Microbiol. 39:242.

Baumont, R. 1996. Palatabilité et comportement alimentaire chez les ruminants. INRA Prod. Anim. 1996, 9(5): 349.

Cervantes, A., Smith, T.R. and J.W. Young. 1996. Effects of nicotinamide on milk composition and production in dairy cows fed supplemental fat. J. Dairy Sci. 79:105.

Esslemont, R.J. and I. Spincer. 1992. The incidence and costs of diseases in dairy herds. DAISY report n° 2. DAISY - The Dairy Information System. University of Reading, United Kingdom, pp. 27.

Fronk, T.J., Schultz, L.H., and A.R. Hardie. 1980. Effect of dry period overconditioning on subsequent metabolic disorders and performance of dairy cows. J, Dairy Sci. 62:1804.

Kamande, G.M., Baah, J., Cheng, K-J., McAllister, T.A. and J.A. Shelford. 2000. Effects of Tween 60 and Tween 80 on protease activity, thiol group reactivity, protein adsorption, and cellulose degradation by rumen microbial enzymes. J. Dairy Sci., 83:536.

Jaster, E.A., Hartnell, G.F., and M.F. Hutgens, 1983. Feeding supplemental niacin for milk production in six dairy herds. J. Dairy Sci., 63:1737.

Kamande, G.M., Shelford, J.A., Cheng, K-J. and Fisher, L.J. 1993. Effect of detergents on in vitro proteolytic activity. Proc. VII World Conference on Animal Production, Edmonton, AB. 2:62.

Littell, R. C. and G.A. Milliken, 1996. SAS System for Mixed Models. Cary, NC, SAS Institute Inc.

Lundeen, T. 2001. Mastitis management: monitoring SCC reduces mastitis incidence. Feedstuffs, January 8: 9.

McAllister, T.A., Stanford, K., Bae, H.D., Treacher, R.J., Hristov, A.N., Baah, J., Shelford, J.A. and K.-J. Cheng. 2000. Effect of a surfactant and exogenous enzymes on digestibility of feed and on growth performance and carcass traits of lambs. J. Anim. Sci., 80:35.

Muller, L.D., Heinrichs, A.J., Cooper; J.B., and Y.H.. Akin. 1986. Supplemental niacin for lactating cows during summer feeding. J. Dairy Sci., 69:1416.

NRC. 1989. Nutrient requirements of dairy cattle. 6th revised edition. National Academy Press. Washington, D.C., pp. 47.

NRC. 2001. Nutrient requirements of dairy cattle. 7th revised edition. National Academy Press, Washington, D.C., pp: 170.

Piva, G., Morlacchini, M., Riccardi, R., Masoero, F., Prandini, A. and F. Mandolini. 1991. Probiotic effect of essential oils in animal feeding. Microbiologie-aliments-nutrition, 9:161.

Shelford, J.A., Cheng, K.J. and G.M. Kamande. 1996. Enzyme enhancers: the key to unlocking the energy from feed. Advances in Dairy Technology, Western Canadian Dairy Seminar, University of Alberta, Edmonton, AB. 8: 269-275.

**Claims**

1.  A feed additive for ruminant animals comprising a nonionic surfactant and an antioxidant agent coated on a particulate carrier, wherein said feed additive comprises from 0.01 to 1% (w/w) of the dry weight of the feed of the nonionic surfactant to enhance the utilization of a feedstuff by the animal and from 50 to 5000ppm of the antioxidant agent, based on the surfactant solution employed to coat the particulate feed additive, to enhance the oxidative stability of the nonionic surfactant.

2.  A feed additive of claim 1 wherein the nonionic surfactant is selected from the group consisting ofpolyoxyethylenesorbitan monooleate, polyoxyethylenesorbitan trioleate, polyoxyethylenesorbitan monostearate, alkyltrimethylammonium bromides, dodecyltrimethylammonium bromide, hexadecyltrimethylammonium bromide, mixed alkyltrimethylammonium bromide, tetradecyltrimethylammonium bromide, benzalkonium chloride, benzethonium chloride, benzyldimethyldodecylammonium bromide, benzyldimethylhexadecylammonium bromide, benzyltrimethylammonium chloride, benzyltrimethylammonium methoxide, cetylpyridinium bromide, cetylpyridinium chloride, cetyltributylphosphonium bromide, cetyltrimethylammonium bromide, decamethonium bromide, dimethyldioctadecylammonium bromide, methylbenzethonium chloride, methyl mixed trialkyl ammonium chloride, methyltrioctylammonium chloride, n, n',mb'-polyethylene (10)-n-tallow-1,3-diaminopropane and 4-picoline dodecyl sulfate.

3.  A feed additive of any one of claims 1 or 2 wherein the nonionic surfactant is selected from the group consisting of polyoxyethylenesorbitan monooleate and polyoxyethylenesorbitan trioleate.

4.  A feed additive of claim 1 wherein the nonionic surfactant comprises from about 10% to about 70% (wt/wt) of surfactant based on the combined weight of the particulate carrier substrate and coating.

5.  A feed additive of claim 4 wherein the nonionic surfactant comprises from about 40% to about 60% (wt/wt) of surfactant based on the combined weight of the particulate carrier substrate and coating.

6.  A feed additive of any one of claims 1 to 5 wherein the antioxidant agent is selected from the group consisting of butylated hydroxyanisole (BHA), butylated hydroxytoluene (BHT), ethoxyquin, propyl gallate, tertiary butyl hydroquinone (TBHQ) and tocopherols.

7.  A feed additive of any one of claims 1 to 6 wherein the antioxidant agent is present in an amount from about 100 to about 2000 ppm based on the surfactant employed in the coating.

8.  A feed additive of claim 1 wherein the solid particulate carrier is selected from the group consisting of celite, diatomaceous earth and silica.

9.  A feed additive of any one of claims 1 to 8 which further comprises at least one digestion enhancing agent.

10. A feed additive of claim 9 wherein the at least one digestion enhancing agent is a lactic acid bacteria inoculum.

11. A feed additive of claim 9 wherein the at least one digestion enhancing agent is monensin.

12. A method of enhancing feed utilization efficiency in a ruminant animal, comprising adding to the feed of the animal a sufficient amount of a feed additive to enhance the utilization of the feed by the animal, wherein the feed additive comprises a nonionic surfactant and an antioxidant agent coated on a particulate carrier substrate, wherein said feed additive comprises from 0.01 to 1% (w/w) of the dry weight of the feed of the nonionic surfactant and from 50 to 5000ppm of the antioxidant agent, based on the surfactant solution employed to coat the particulate feed additive, to enhance the oxidative stability of the nonionic surfactant.

13. A method of claim 12 wherein the nonionic surfactant is selected from the group consisting of polyoxyethylenesorbitan monooleate, polyoxyethylenesorbitan trioleate, polyoxyethylenesorbitan monostearate, alkyltrimethylammonium bromides, dodecyltrimethylammonium bromide, hexadecyltrimethylammonium bromide, mixed alkyltrimethylammonium bromide, tetradecyltrimethylammonium bromide, benzalkonium chloride, benzethonium chloride, benzyldimethyldodecylammonium bromide, benzyldimethylhexadecylammonium bromide, benzyltrimethylammonium chloride, benzyltrimethylammonium methoxide, cetylpyridinium bromide, cetylpyridinium chloride, cetyltributylphosphonium bromide, cetyltrimethylammonium bromide, decamethonium bromide, dimethyldioctadecylammonium bromide, methylbenzethonium chloride, methyl mixed trialkyl ammonium chloride, methyltrioctylammonium chloride, n, n', mb'-polyethylene (10)-n-tallow-1,3-diaminopropane and 4-picoline dodecyl sulfate.

**14.** A method of claim 12 wherein the nonionic surfactant is selected from the group consisting of polyoxyethylenesorbitan monooleate and polyoxyethylenesorbitan trioleate.

**15.** A method of any one of claims 12 to 14 wherein the nonionic surfactant comprises from about 0.01 to 1% (w/w) of the dry weight of the feed.

**16.** A method of claim 15 wherein the nonionic surfactant comprises from about 0.01 to 0.3% (w/w) of the dry weight of the feed.

**17.** A method of any one of claims 12 to 16 wherein the antioxidant agent is selected from the group consisting of butylated hydroxyanisole (BHA), butylated hydroxytoluene (BHT), ethoxyquin, propyl gallate, tertiary butyl hydroquinone (TBHQ) and tocopherols.

**18.** A method of any one of claims 12 or 13 wherein the antioxidant agent is present in an amount from about 100 to about 2000 ppm based on the surfactant employed in the coating.

**19.** A method of claim 12 wherein the particulate carrier substrate is selected from the group consisting of celite, diatomaceous earth and silica.

**20.** A method of any one of claims 12 to 19 which further comprises adding at least one digestion enhancing agent to the feed.

**21.** A method of claim 20 wherein the at least one digestion enhancing agent is a lactic acid bacteria inoculum.

**22.** A method of claim 20 wherein the at least one digestion enhancing agent is monensin.

**Patentansprüche**

**1.** Futtermittelzusatz für Wiederkäuer, umfassend ein nicht ionisches Tensid und ein Antioxidationsmittel, die auf einen partikulären Träger geschichtet sind, wobei der Futtermittelzusatz umfasst: zwischen 0,01 und 1 Gewichts-% des Futtertrockengewichts des nicht ionischen Tensids, um die Verwertung eines Futtermittels durch das Tier zu steigern, sowie zwischen 50 und 5.000 ppm des Antioxidationsmittels, basierend auf der zur Beschichtung des partikulären Futtermittelzusatzes verwendeten Tensidlösung, um die oxidative Stabilität des nicht ionischen Tensids zu steigern.

**2.** Futtermittelzusatz nach Anspruch 1, wobei das nicht ionische Tensid ausgewählt ist aus der Gruppe bestehend aus Polyoxyethylensorbitanmonooleat, Polyoxyethylensorbitantrioleat, Polyoxyethylensorbitanmonostearat, Alkyltrimethylammoniumbromiden, Dodecyltrimethylammoniumbromid, Hexadecyltrimethylammoniumbromid, gemischtem Alkyltrimethylammoniumbromid, Tetradecyltrimethylammoniumbromid, Benzalkoniumchlorid, Benzethoniumchlorid, Benzyldimethyldodecylammoniumbromid, Benzyldimethylhexadecylammoniumbromid, Benzyltrimethylammoniumchlorid, Benzyltrimethylammoniummethoxid, Cetylpyridiniumbromid, Cetylpyridiniumchlorid, Cetyltributylphosphoniumbromid, Cetyltrimethylammoniumbromid, Decamethoniumbromid, Dimethyldioctadecylammoniumbromid, Methylbenzethoniumchlorid, mit Methyl vermischtem Trialkylammoniumchlorid, Methyltrioctylammoniumchlorid, n, n',mb'-Polyethylen(10)-n-Talg-1,3-Diaminopropan und 4-Picolindodecylsulfat.

**3.** Futtermittelzusatz nach einem der Ansprüche 1 oder 2, wobei das nicht ionische Tensid ausgewählt ist aus der Gruppe bestehend aus Polyoxyethylensorbitanmonooleat und Polyoxyethylensorbitantrioleat.

**4.** Futtermittelzusatz nach Anspruch 1, wobei das nicht ionische Tensid zwischen 10 und etwa 70 Gewichts-% des Tensids, basierend auf dem kombinierten Gewicht des partikulären Trägersubstrats und der Beschichtung umfasst.

**5.** Futtermittelzusatz nach Anspruch 4, wobei das nicht ionische Tensid zwischen etwa 40 und etwa 60 Gewichts-% des Tensids, basierend auf dem kombinierten Gewicht des partikulären Trägersubstrats und der Beschichtung umfasst.

**6.** Futtermittelzusatz nach einem der Ansprüche 1 bis 5, wobei das Antioxidationsmittel ausgewählt ist aus der Gruppe bestehend aus butyliertem Hydroxyanisol (BHA), butyliertem Hydroxytoluen (BHT), Ethoxyquin, Propylgallat, tertiärem Butylhydrochinon (TBHQ) und Tocopherolen.

**7.** Futtermittelzusatz nach einem der Ansprüche 1 bis 6, wobei das Antioxidationsmittel in einer Menge von etwa 100 bis etwa 2.000 ppm, basierend auf dem bei der Beschichtung verwendeten Tensid vorliegt.

**8.** Futtermittelzusatz nach Anspruch 1, wobei der feste partikuläre Träger ausgewählt ist aus der Gruppe bestehend aus Celit, Diatomeenerde und Silizium.

**9.** Futtermittelzusatz nach einem der Ansprüche 1 bis 8, des Weiteren umfassend mindestens ein verdauungsförderndes Mittel.

**10.** Futtermittelzusatz nach Anspruch 9, wobei das mindestens eine verdauungsfördernde Mittel ein Inokulum aus Milchsäurebakterien ist.

**11.** Futtermittelzusatz nach Anspruch 9, wobei das mindestens eine verdauungsfördernde Mittel Monensin ist.

**12.** Verfahren zur Steigerung der Effizienz der Futterverwertung in einem Wiederkäuer, umfassend die Zugabe einer ausreichenden Menge an Futtermittelzusatz zum Futter des Tiers, um die Verwertung des Futters durch das Tier zu steigern, wobei der Futtermittelzusatz ein nicht ionisches Tensid und ein Antioxidationsmittel umfasst, die auf ein partikuläres Trägersubstrat geschichtet sind, wobei der Futtermittelzusatz umfasst: zwischen 0,01 und 1 Gewichts-% des Futtertrockengewichts des nicht ionischen Tensids sowie zwischen 50 und 5.000 ppm des Antioxidationsmittels, basierend auf der zur Beschichtung des partikulären Futtermittelzusatzes verwendeten Tensidlösung, um die oxidative Stabilität des nicht ionischen Tensids zu steigern.

**13.** Verfahren nach Anspruch 12, wobei das nicht ionische Tensid ausgewählt ist aus der Gruppe bestehend aus Polyoxyethylensorbitanmonooleat, Polyoxyethylensorbitantrioleat, Polyoxyethylensorbitanmonostearat, Alkyltrimethylammoniumbromiden, Dodecyltrimethylammoniumbromid, Hexadecyltrimethylammoniumbromid, gemischtem Alkyltrimethylammoniumbromid, Tetradecyltrimethylammoniumbromid, Benzalkoniumchlorid, Benzethoniumchlorid, Benzyldimethyldodecylammoniumbromid, Benzyldimethylhexadecylammoniumbromid, Benzyltrimethylammoniumchlorid, Benzyltrimethylammoniummethoxid, Cetylpyridiniumbromid, Cetylpyridiniumchlorid, Cetyltributylphosphoniumbromid, Cetyltrimethylammoniumbromid, Decamethoniumbromid, Dimethyldioctadecylammoniumbromid, Methylbenzethoniumchlorid, mit Methyl vermischtem Trialkylammoniumchlorid, Methyltrioctylammoniumchlorid, n,n',mb'-Polyethylen(10)-n-Talg-1,3-Diaminopropan und 4-Picolindodecylsulfat.

**14.** Verfahren nach Anspruch 12, wobei das nicht ionische Tensid ausgewählt ist aus der Gruppe bestehend aus Polyoxyethylensorbitanmonooleat und Polyoxyethylensorbitantrioleat.

**15.** Verfahren nach einem der Ansprüche 12 bis 14, wobei das nicht ionische Tensid zwischen 0,01 und 1 Gewichts-% des Futtertrockengewichts umfasst.

**16.** Verfahren nach Anspruch 15, wobei das nicht ionische Tensid zwischen 0,01 und 0,3 Gewichts-% des Futtertrockengewichts umfasst.

**17.** Verfahren nach einem der Ansprüche 12 bis 16, wobei das Antioxidationsmittel ausgewählt ist aus der Gruppe bestehend aus butyliertem Hydroxyanisol (BHA), butyliertem Hydroxytoluen (BHT), Ethoxyquin, Propylgallat, tertiärem Butylhydrochinon (TBHQ) und Tocopherolen.

**18.** Verfahren nach einem der Ansprüche 12 oder 13, wobei das Antioxidationsmittel in einer Menge von etwa 100 bis etwa 2.000 ppm, basierend auf dem bei der Beschichtung verwendeten Tensid vorliegt.

**19.** Verfahren nach Anspruch 12, wobei das partikuläre Trägersubstrat ausgewählt ist aus der Gruppe bestehend aus Celit, Diatomeenerde und Silizium.

**20.** Verfahren nach einem der Ansprüche 12 bis 19, des Weiteren umfassend die Zugabe mindestens eines verdauungsfördernden Mittels zu dem Futter.

**21.** Verfahren nach Anspruch 20, wobei das mindestens eine verdauungsfördernde Mittel ein Inokulum aus Milchsäurebakterien ist.

**22.** Verfahren nach Anspruch 20, wobei das mindestens eine verdauungsfördernde Mittel Monensin ist.

**Revendications**

**1.** Additif alimentaire pour ruminants comprenant un agent tensioactif non ionique et un agent antioxydant enrobant un support particulaire, où ledit additif alimentaire comprend de 0,01 à 1 % (p/p) du poids sec de l'apport d'agent tensioactif non ionique pour renforcer l'utilisation d'une denrée alimentaire par l'animal et de 50 à 5 000 ppm d'agent antioxydant, par rapport à la solution tensioactive employée pour enrober l'additif alimentaire particulaire, afin de renforcer la stabilité oxydative de l'agent tensioactif non ionique.

**2.** Additif alimentaire selon la revendication 1, dans lequel l'agent tensioactif non ionique est choisi dans le groupe constitué par le monooléate de polyoxyéthylènesorbitan, le trioléate de polyoxyéthylènesorbitan, le monostéarate de polyoxyéthylènesorbitan, les bromures d'alkyltriméthylammonium, le bromure de dodécyltriméthylammonium, le bromure d'hexadécyltriméthylammonium, le bromure d'alkyltriméthylammonium mixte, le bromure de tétradécyltriméthylammonium, le chlorure de benzalkonium, le chlorure de benzéthonium, le bromure de benzyldiméthyldodécylammonium, le bromure de benzyldiméthylhexadécylammonium, le chlorure de benzyltriméthylammonium, le méthoxyde de benzyltriméthylammonium, le bromure de cétylpyridinium, le chlorure de cétylpyridinium, le bromure de cétyltributylphosphonium, le bromure de cétyltriméthylammonium, le bromure de décaméthonium, le bromure de diméthyldioctadécylammonium, le chlorure de méthylbenzéthonium, le chlorure de méthyl trialkyl (mixte) ammonium, le chlorure de méthyltrioctylammonium, le n,n',mb'-poly(éthylène)(10)-n-suif-1,3-diaminopropane et le sulfate de 4-picolinedodécyle.

**3.** Additif alimentaire selon l'une quelconque des revendications 1 ou 2, dans lequel l'agent tensioactif non ionique est choisi dans le groupe constitué par le monooléate de polyoxyéthylènesorbitan et le trioléate de polyoxyéthylènesorbitan.

**4.** Additif alimentaire selon la revendication 1, dans lequel l'agent tensioactif non ionique comprend d'environ 10 % à environ 70 % (p/p) d'agent tensioactif par rapport au poids combiné du substrat de support à particules et de l'enrobage.

**5.** Additif alimentaire selon la revendication 4, dans lequel l'agent tensioactif non ionique comprend d'environ 40 % à environ 60 % (p/p) d'agent tensioactif par rapport au poids combiné du substrat de support à particules et de l'enrobage.

**6.** Additif alimentaire selon l'une quelconque des revendications 1 à 5, dans lequel l'agent antioxydant est choisi dans le groupe constitué par l'hydroxyanisole butylé (BHA), l'hydroxytoluène butylé (BHT), l'éthoxyquine, le gallate de propyle, la tertiobutylhydroquinone (TBHQ) et les tocophérols.

**7.** Additif alimentaire selon l'une quelconque des revendications 1 à 6, dans lequel l'agent antioxydant est présent dans une quantité d'environ 100 à environ 2000 ppm par rapport à l'agent tensioactif employé dans l'enrobage.

**8.** Additif alimentaire selon la revendication 1, dans lequel le support à particules solide est choisi dans le groupe constitué par la célite, la terre de diatomées et la silice.

**9.** Additif alimentaire selon l'une quelconque des revendications 1 à 8, qui comprend en outre au moins un agent facilitant la digestion.

**10.** Additif alimentaire selon la revendication 9, dans lequel le au moins un agent facilitant la digestion est un inoculum de bactéries d'acide lactique.

**11.** Additif alimentaire selon la revendication 9, dans lequel le au moins un agent facilitant la digestion est la monensine.

**12.** Procédé permettant de renforcer l'efficacité d'utilisation de l'alimentation chez un ruminant, comprenant l'addition à l'alimentation de l'animal d'une quantité suffisante d'un additif alimentaire pour renforcer l'utilisation de l'alimentation par l'animal, l'additif alimentaire comprenant un agent tensioactif non ionique et un agent antioxydant enrobé sur un substrat de support à particules, ledit additif alimentaire comprenant de 0,01 à 1 % (p/p) du poids sec de l'apport d'agent tensioactif non ionique et de 50 à 5000 ppm de l'agent antioxydant par rapport à la solution tensioactive employée pour enrober l'additif alimentaire à particules, afin de renforcer la stabilité oxydative de l'agent tensioactif non ionique.

**13.** Procédé selon la revendication 12, dans lequel l'agent tensioactif non ionique est choisi dans le groupe constitué par le monooléate de polyoxyéthylènesorbitan, le trioléate de polyoxyéthylènesorbitan, le monostéarate de polyoxyéthylènesorbitan, les bromures d'alkyltriméthylammonium, le bromure de dodécyltriméthylammonium, le bromure d'hexadécyltriméthylammonium, le bromure d'alkyltriméthylammonium mixte, le bromure de tétradécyltriméthylammonium, le chlorure de benzalkonium, le chlorure de benzéthonium, le bromure de benzyldiméthyldodécylammonium, le bromure de benzyldiméthylhexadécylammonium, le chlorure de benzyltriméthylammonium, le méthoxyde de benzyltriméthylammonium, le bromure de cétylpyridinium, le chlorure de cétylpyridinium, le bromure de cétyltributylphosphonium, le bromure de cétyltriméthylammonium, le bromure de décaméthonium, le bromure de diméthyldioctadécylammonium, le chlorure de méthylbenzéthonium, le chlorure de méthyl trialkyl (mixte) ammonium, le chlorure de méthyltrioctylammonium, le n,n',mb'-poly(éthylène)(10)-n-suif-1,3-diaminopropane et le sulfate de 4-picolinedodécyle.

**14.** Procédé selon la revendication 12, dans lequel l'agent tensioactif non ionique est choisi dans le groupe constitué par le monooléate de polyoxyéthylènesorbitan et le trioléate de polyoxyéthylènesorbitan.

**15.** Procédé selon l'une quelconque des revendications 12 à 14, dans lequel l'agent tensioactif non ionique représente environ 0,01 à 1 % (p/p) du poids sec de l'alimentation.

**16.** Procédé selon la revendication 15, dans lequel l'agent tensioactif non ionique représente environ 0,01 à 0,3 % (p/p) du poids sec de l'alimentation.

**17.** Procédé selon l'une quelconque des revendications 12 à 16, dans lequel l'agent antioxydant est choisi dans le groupe constitué par l'hydroxyanisole butylé (BHA), l'hydroxytoluène butylé (BHT), l'éthoxyquine, le gallate de propyle, la butyl-hydroquinone tertiaire (TBHQ) et les tocophérols.

**18.** Procédé selon l'une quelconque des revendications 12 ou 13, dans lequel l'agent antioxydant est présent dans une quantité d'environ 100 à environ 2 000 ppm par rapport à l'agent tensioactif employé dans l'enrobage.

**19.** Procédé selon la revendication 12, dans lequel le substrat de support à particules est choisi dans le groupe constitué par la célite, la terre de diatomées et la silice.

**20.** Procédé selon l'une quelconque des revendications 12 à 19, qui comprend en outre l'addition d'au moins un agent facilitant la digestion à l'alimentation.

**21.** Procédé selon la revendication 20, dans lequel le au moins un agent facilitant la digestion est un inoculum de bactéries d'acide lactique.

**22.** Procédé selon la revendication 20, dans lequel le au moins un agent facilitant la digestion est la monensine.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5314852 A

- US 6221381 B, Shelford

### Non-patent literature cited in the description

- Microbial ecology and physiology of feed degradation within the rumen. **Cheng et al.** Physiological aspects of digestion and metabolism in ruminants: Proceedings of the seventh international symposium on ruminant physiology. 1991
- **Feng et al.** Effect of enzyme additives on in situ and in vitro degradation of mature cool-season grass forage. *J. Anim. Sci.,* 1996, vol. 70 (1), 309
- **Jouany.** Methods of manipulating the microbial metabolism in the rumen. *Ann. Zootech.,* 1994, vol. 43, 49-62
- **Beauchemin et al.** Fibrolytic enzymes increase fiber digestibility and growth rate of steers fed dry forages. *Can. J. Anim. Sci.,* 1995, vol. 75, 641-644
- **Perry et al.** Effects of supplemental enzymes on nitrogen balance, digestibility of energy and nutrients and on growth and feed efficiency of cattle. *J. Anim. Sci.,* 1966, vol. 25, 760-764
- **Svozil et al.** Application of a cellulolytic preparation in nutrition of lambs. *Sbor., Ved. Praci. VUVZ Prhrelice,* 1989, vol. 22, 69-78
- Manipulation of rumen fermentation. **Van Nevel et al.** The Rumen Microbial Ecosystem. Elsevier Applied Science, 1988, 387
- Surface Active Agents. **Griffin et al.** Handbook of Food Additives. CRC Press, 1972, 397
- **Castanon et al.** Effects of the surfactant Tween 80 on enzymatic hydrolysis of newspaper. *Biotechnol. & Bioeng.,* 1981, vol. 23, 1365
- American Oil Chemists' Society Official Method Cd 12-57 for Fat Stability: Active Oxygen Method. *Rancimat,* 1989
- **Laubli, M. W. ; Bruttel, P. A.** *JOACS,* 1986, vol. 63, 792-795
- **Joyner, N. T. ; J. E. McIntyre.** *Oil and Soap,* 1938, vol. 15, 184
- **Jaster, E.A. et al.** Feeding supplemental niacin for milk production in six dairy herds. *J. Dairy Sci.,* 1983, vol. 63, 1737
- **Fronk, T.J. et al.** Effect of dry period overconditioning on subsequent metabolic disorders and performance of dairy cows. *J. Dairy Sci.,* 1980, vol. 62, 1804

- **Cervantes, A. et al.** Effects of nicotinamide on milk composition and production in dairy cows fed supplemental fat. *J. Dairy Sci.,* 1996, vol. 79, 105
- **Muller, L.D. et al.** Supplemental niacin for lactating cows during summer feeding. *J. Dairy Sci.,* 1986, vol. 69, 1416
- NRC. Nutrient requirements of dairy cattle. National Academy Press, 1989, 47
- **Littell, R. C. et al.** SAS System for Mixed Models. SAS Institute Inc, 1996
- **Lundeen, T.** Mastitis management: monitoring SCC reduces mastitis incidence. *Feedstuffs,* vol. 9
- **Akin, D.E.** Evaluation by electron microscopy and anaerobic culture of types of rumen bacteria associated with digestion of forage cell walls. *Appl. Environ. Microbiol.,* 1980, vol. 39, 242
- **Baumont, R.** Palatabilité et comportement alimentaire chez les ruminants. *INRA Prod. Anim.,* 1996, vol. 9 (5), 349
- **Cervantes, A. ; Smith, T.R. ; J.W. Young.** Effects of nicotinamide on milk composition and production in dairy cows fed supplemental fat. *J. Dairy Sci.,* 1996, vol. 79, 105
- **Esslemont, R.J. ; I. Spincer.** The incidence and costs of diseases in dairy herds. *DAISY report n° 2. DAISY - The Dairy Information System,* 1992, 27
- **Fronk, T.J. ; Schultz, L.H. ; A.R. Hardie.** Effect of dry period overconditioning on subsequent metabolic disorders and performance of dairy cows. *J, Dairy Sci.,* 1980, vol. 62, 1804
- **Kamande, G.M ; Baah, J. ; Cheng, K-J. ; McAllister, T.A. ; J.A. Shelford.** Effects of Tween 60 and Tween 80 on protease activity, thiol group reactivity, protein adsorption, and cellulose degradation by rumen microbial enzymes. *J. Dairy Sci.,* 2000, vol. 83, 536
- **Jaster, E.A. ; Hartnell, G.F. ; M.F. Hutgens.** Feeding supplemental niacin for milk production in six dairy herds. *J. Dairy Sci.,* 1983, vol. 63, 1737
- **Kamande, G.M. ; Shelford, J.A. ; Cheng, K-J ; Fisher, L.J.** Effect of detergents on in vitro proteolytic activity. *Proc. VII World Conference on Animal Production,* 1993, vol. 2, 62

- **Littell, R. C. ; G.A. Milliken.** SAS System for Mixed Models. Cary, NC, SAS Institute Inc, 1996
- **Lundeen, T.** Mastitis management: monitoring SCC reduces mastitis incidence. *Feedstuffs,* 08 January 2001, 9
- **McAllister, T.A. ; Stanford, K. ; Bae, H.D. ; Treacher, R.J ; Hristov, A.N. ; Baah, J. ; Shelford, J.A. ; K.-J. Cheng.** Effect of a surfactant and exogenous enzymes on digestibility of feed and on growth performance and carcass traits of lambs. *J. Anim. Sci.,* 2000, vol. 80, 35
- **Muller, L.D. ; Heinrichs, A.J. ; Cooper; J.B. ; Y.H.. Akin.** Supplemental niacin for lactating cows during summer feeding. *J. Dairy Sci.,* 1986, vol. 69, 1416
- **NRC.** Nutrient requirements of dairy cattle. National Academy Press, 1989, 47
- **NRC.** Nutrient requirements of dairy cattle. National Academy Press, 2001, 170
- **Piva, G. ; Morlacchini, M. ; Riccardi, R. ; Masoero, F. ; Prandini, A. ; F. Mandolini.** Probiotic effect of essential oils in animal feeding. *Microbiologie-aliments-nutrition,* 1991, vol. 9, 161
- **Shelford, J.A. ; Cheng, K.J. ; G.M. Kamande.** Enzyme enhancers: the key to unlocking the energy from feed. *Advances in Dairy Technology, Western Canadian Dairy Seminar,* 1996, vol. 8, 269-275